# EUROPEAN PATENT APPLICATION

(11) **EP 4 629 104 A1**
(43) Date of publication of application: **08.10.2025**
(21) Application number: 24168780.5
(22) Date of filing: 05.04.2024
(51) Int. Cl.: G06F 16/906, G06N 3/00

(54) **METHOD FOR PRECONFIGURING A PERFORMANCE ESTIMATION STRATEGY FOR NEURAL ARCHITECTURE SEARCH**

(71) Applicant: NXP B.V., 5656 AG Eindhoven (NL)
(72) Inventor: Torres Rodriguez, Hiram Rayo, 5656 AG Eindhoven (NL); van de Waterlaat, Nick Petrus Martinus, 5656 AG Eindhoven (NL); Sanberg, Willem Pieter, 5656 AG Eindhoven (NL)
(74) Representative: Krott, Michel

(57) **Abstract**

A method of preconfiguring a neural architecture search, NAS, is proposed. A ground truth performance is obtained, wherein the ground truth performance of a neural network is used for a limited amount of solutions taken as a reference which represent neural networks having been trained to their full extent. The proposed method delivers a performance estimation strategy to a NAS procedure, enabling an automated process of defining the NAS. Hence, a user has not to give any inputs as regards performance estimation strategy which optimizes a design space of NAS. This is achieved by an instance of the search space having been selected and trained, wherein a performance estimation metrics is computed. A library of performance estimation strategies is taken from a database, wherein a matrix of the strategies is computed for a small reduced set of neural networks.

## Description

### TECHNICAL FIELD

The present disclosure relates to a method for preconfiguring a performance estimation strategy for neural architecture search. Furthermore, the present disclosure relates to an apparatus for performing the proposed method. Furthermore, the present disclosure relates to a computer implemented method for carrying out the proposed method.

### BACKGROUND

Neural Architecture Search (NAS) has emerged as a solution to automate the design of highly accurate and efficient Deep Neural Networks (DNN). As a result, NAS has recently become a de-facto approach for designing state-of-the-art models for multiple application domains, including vision, audio, and radar. Early NAS works trained and evaluated candidate solutions by fully training them to identify the top-performing models for a given task. However, the compute cost of fully training networks can be prohibitive. As a result, conventional NAS approaches rely on performance estimation strategies to circumvent the cost of having to fully train networks, resulting in more effective approaches which ultimately improve NAS scalability.

However, selecting the right performance estimation strategy for NAS for a given use case (comprising a task, a dataset, and a neural network) is not trivial, as different performance estimation strategies may have different levels of effectiveness depending on the use case.

For example, learning curve methods may be highly sensitive to the number of epochs selection and the training stability. Furthermore, they may not be applicable to NAS and HPO (Hyperparameter Optimization) search spaces. Moreover, model-based predictors may require many samples for training to give sufficiently decent performance estimates. Also, zero-cost proxies may exhibit wildly different correlations between estimated and ground truth performance across different tasks.

The present disclosure proposes an improved method to automate a selection of a good performance estimation strategy for a given NAS use case.

US 20210334624 A1 discloses a neural network to predict model performance.

CN 115983363 A uses a performance predictor using knowledge distillation.

CN 114444654 A proposes a method for performance prediction without training.

US 10997503 B2 proposes to efficiently perform NAS by maintaining population and threshold data.

US 2022/0156508 A1 proposes to use surrogates based on block-level distillation losses to perform NAS efficiently.

### SUMMARY

It is an object to provide an improved method for defining a NAS process.

According to a first aspect of the present disclosure there is provided a method for preconfiguring a performance estimation strategy for neural architecture search, comprising the steps:
- selecting a neural network out of a pre-defined search space comprising a variety of neural network architectures, which represent numerous potential neural networks for a specific use case together with corresponding hyperparameters for a training of said neural networks;
- training the selected neural network to a specified extent;
- computing a performance estimation metrics under usage of various performance estimation of strategies;
- determining and evaluating a ranking correlation between performance estimation metrics and the performance of a neural network having been trained to the specified extent; and
- determining a performance estimation strategy for the neural architecture search in order to handle the specific use case by means of a neural network as a result of the evaluation step.

In this way a ground truth performance is obtained, wherein the ground truth performance of a neural network is used for a limited amount of solutions taken as a reference and which represent neural networks having been trained to its full extent. The proposed method delivers an optimized performance estimation strategy to a NAS procedure, enabling thus an optimized process of NAS afterwards. Hence, a user has not to give any inputs as regards performance estimation strategy which optimizes a design space of NAS. This is achieved by an instance of the search space having been selected and trained, wherein a performance estimation metrics is computed. A library of performance estimation strategies is taken from a database, wherein a matrix of the strategies is computed for a small reduced set of neural networks.

According to a further aspect there is provided an apparatus configured to perform the proposed method.

According to a further aspect there is provided a computer implemented method comprising executable instructions storable on computer-readable storage medium which, when executed by a proposed apparatus cause said apparatus to carry out the proposed method.

According to one or more embodiments, the training to a specified extent is one out of: Full training, Early mean average precision, FLOPS (Floating Point Operations).

According to one or more embodiments, depending on an achievement of a sufficient correlation, a performance estimation strategy is selected for NAS or another neural network is sampled from the search space. This loop procedure can be parallelized and can thus be more efficient.

According to one or more embodiments, by the evaluation in the ranking correlation between performance estimation metrics and ground truth performance one out of the following is used: correlation as a function of number of samples for Zero-cost proxies, correlation as a function of number of samples for multiple model-based predictors, correlation as a function of number of samples for validation mAP estimation strategy.

According to one or more embodiments, a requirement how much correlation and/or how much computing time is considered to be sufficient for the test with respect to sufficient correlation is taken into account by determining a performance estimation strategy for the neural architecture search. This is implemented with further two optional inputs to the whole procedure at an inquiry stage. In this way, e.g. optimal solutions within a limited time budget for computing (e.g. within one hour) can be obtained.

According to one or more embodiments, a performance estimation strategy with the highest correlation and/or the lowest computing effort is selected.

According to one or more embodiments, hyperparameters are part of the search space are used to train the network.

According to one or more embodiments, results of previous runs of the training having been stored in a database are reused in the course of the method.

According to one or more embodiments, in a step as part of the loop the computation of performance estimation metrics for all strategies is done by taking into account the library of performance estimation strategies stored in a database. This results in a collection of algorithms within a database, wherein a running of ground truth through all of these algorithms is obtained. Estimators for focusing on the predictive performance of the network are obtained in this way, thereby enabling NAS to be carried out rather quickly.

### BRIEF DESCRIPTION OF DRAWINGS

The aspects defined above and further aspects of the present disclosure are apparent from the examples of embodiment to be described hereinafter with reference to the appended drawings, which are explained with reference to examples of embodiment. However, the disclosure is not limited to the described examples of embodiment.

All illustrations in the drawings are schematical. It is noted, that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.
- FIG. 1a: shows a structure of a conventional design of NAS;
- FIG. 1b: shows a structure of a proposed design of NAS;
- FIG. 2: is a diagram showing an efficiency of the proposed method;
- FIG. 3: is a diagram showing a flow of the proposed method;
- FIG. 4: is a table showing an efficiency of the proposed method;
- FIGs. 5-7: show criteria for performing the proposed method; and
- FIG. 8: is a further diagram showing an efficiency of the proposed method;;

### DESCRIPTION OF EMBODIMENTS

The proposed method uses a limited number of trained neural network architectural samples (initialization samples) from a specified search space and evaluates a correlation between the estimated and ground truth performance of various performance estimation techniques such as e.g. learning curve methods, model-based predictors, zero-cost proxies, etc. The goal is then to automatically select the best performance estimation strategy based on the correlation achieved by each strategy, while also considering the compute effort required to calculate each of these performance estimation metrics.

The proposed method has as an important key component an automated approach to guide the selection of a good performance estimation strategy for a given NAS use case which is not specific as regards strategy, dataset, network, search space, etc., thus removing a need for the previously costly trial and error approach to ultimately enable highly scalable NAS.

An optional component is represented by a meta-information database stored locally or on the cloud that allows to reuse information from previous trainings to further speed up the proposed procedure.

When using the proposed method, the selection of the performance estimation strategy is done automatically, thus resulting in a highly scalable search processes due to the choice of an adequate performance estimation strategy for any given NAS use case.

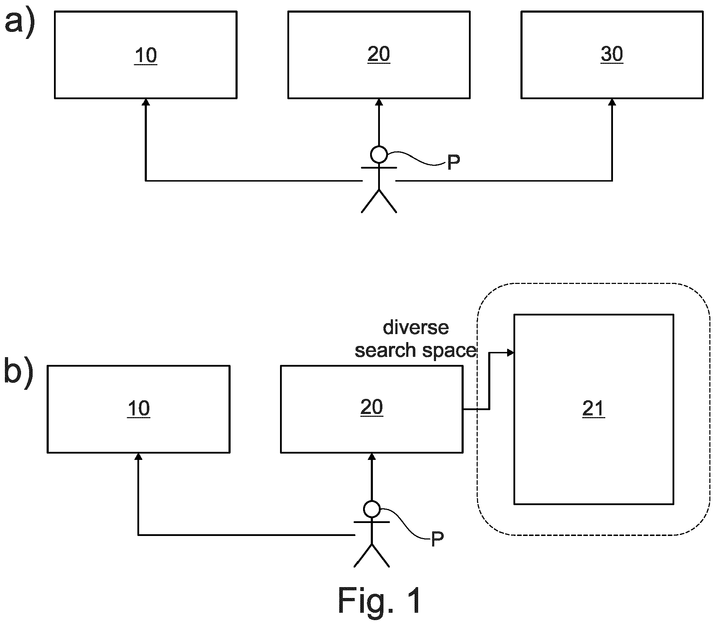

FIG. 1a shows how in principle the design phase of traditional NAS. In a specified search space 20 out of potential solutions as regards neural networks for a specific use case the algorithm to carry out the proposed method is given flexibility, e.g. different combinations of structures in the neural network. In a search strategy 10 there exists a potential space of solutions. In other words, this is how these potential solutions are explored. And in the performance estimation strategy 30: the way that these NAS algorithms work: the search space 20 is known and also known how to explore it. So a potential solution is selected from the search space 20, will be trained and evaluated: How good is the sample solution on the problem that you care (e.g. recognizing persons of image data, classifying cats and dogs, etc.).

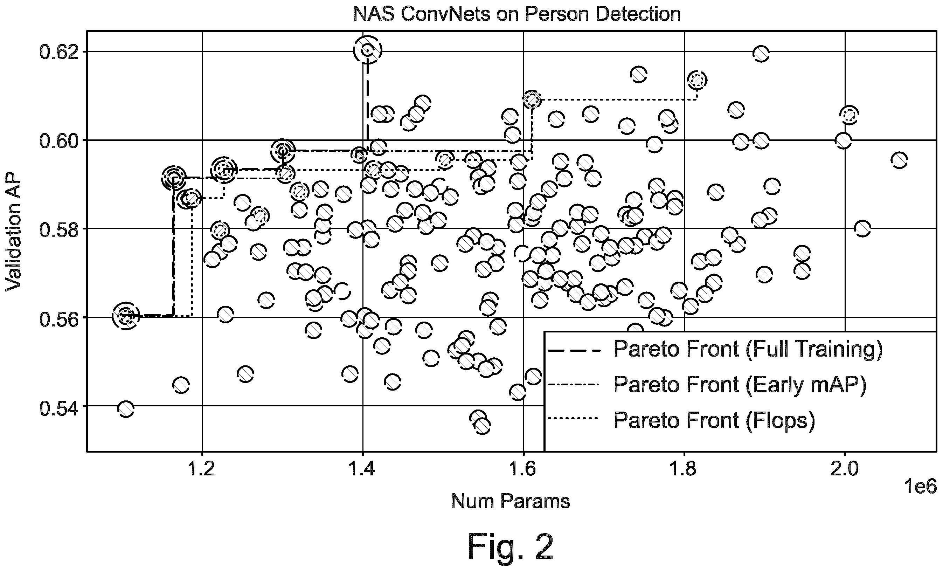

FIG. 2 is a diagram depicting a performance of neural networks for a particular problem, in this case person detection, i.e. to detect whether a person is within a certain image having been captured by an image collecting system. Intended is the highest performance with the lowest number of parameters. FIG. 2 thus shows a motivation why performance estimation strategies are relevant. On the x-axis one recognizes a number of parameters, that the neural network can use to make a prediction, on the y-axis is the validation average precision AP, with the effect the higher, the better. One recognizes, that using performance estimation strategies 30 like Early Stopping (τ = 0.69) and number of FLOPS (τ = 0.5) in NAS can succeed in deriving competitive solutions compared to full training.

As can be further seen in FIG. 2, despite using performance estimation strategies with a rather "imperfect" correlation, such correlations are sufficient to derive high performing solutions, which in the case of early stopping (Early mean average precision, Early mAP), are competitive with full training, and in the case of flops exhibit only slightly lower performance compared to full training. This shows that using "imperfect" performance estimation strategies can still enable NAS to derive high-performing solutions.

Put different, FIG. 2 shows in principle a motivation why performance estimation strategies 30 in the context of NAS may be useful. Shown are capabilities of a neural network to solve a particular problem (in the shown exemplary case: person detection). Ideally, it is intended to have the lowest number of parameters and the highest performance, because this means that on the hardware this tends to be more effective (the more parameters you need the more memory you need). Sampled are appr. one hundred neural networks and then a performance of these hundred neural networks are shown, depicted as filled dots. Best performing neural networks are shown via "Pareto Front" curve. One can see that if a performance estimation strategy 30 is used in these hundred solutions, these solutions are estimated by the performance estimation strategy 30. The curve indicating "Early mAP" means a training not at 100% of the time, but only 20% of the time. If that is used as the estimation then these are the solutions which are selected. The Pareto Front curve "Flops" may be one of the most efficient performance estimation strategies 30 which is formed as an expected trade-off between efficiency and computing effort.

The proposed method evaluates an impact of using performance estimation strategies 30 on NAS scalability. To this end, three end-to-end NAS searches are run, using the best-performing estimation strategy per category (Early Stopping, Bayesian Ridge and number of FLOPs) using random search as the search strategy for a total of hundred trials, comparing the results with full training.

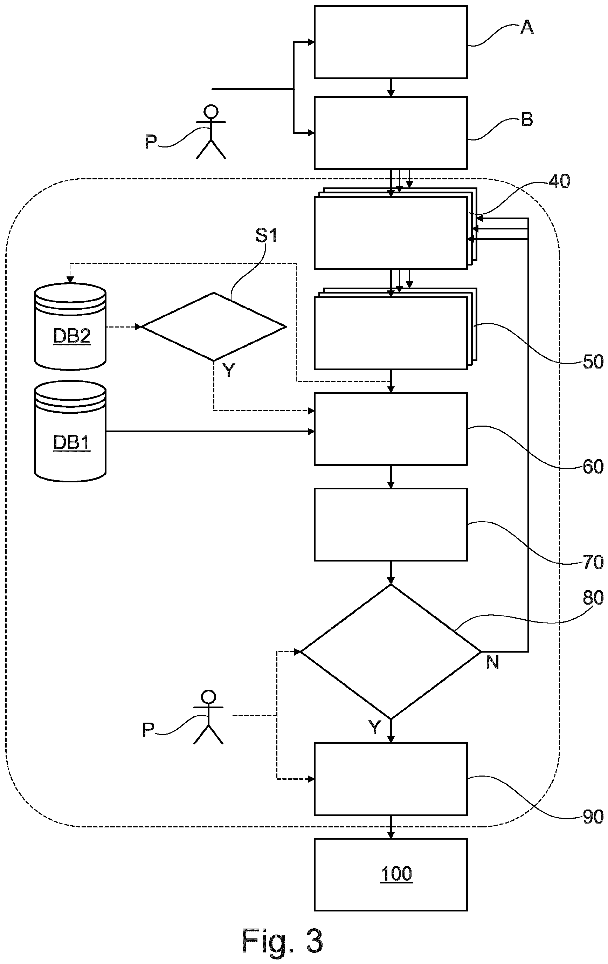

FIG. 3 shows a diagram depicting main steps of the proposed method for automated performance estimation strategy selection as proposed to be used in the present disclosure. In a step A, a specific use case is defined where the proposed method will be applied. This use case is defined as a so called "baseline neural network" or a "seed network" under usage of a target dataset and an optimization objective (e.g., accuracy, precision, etc.). It should be noted that, as shown in FIG. 3, these are input by the user P as a prerequisite to the proposed method.

Afterwards, in a step B, a diverse search space based on the provided neural network model is defined by the user P. Such search space may include, e.g., searchable number of filters, kernel sizes, number of layers and potentially training-related hyperparameters such as e.g. regularizer type, regularizer strength, learning rate, type of initialization, etc.

In effect, both steps A, B are to be seen as prerequisites of the proposed method. In other words, the proposed method does not address how to design a search space 20 but assumes a baseline use case and a user-defined search space 20.

Initially, in a step 40, a network is sampled from the defined search space 20 and trained in a step 50 to start populating the initialization samples which will be used to select a good performance estimation strategy 30 for the specified use case. In an alternative embodiment, as indicated with the stacked steps 40 and 50 in FIG. 3, said steps 40, 50 of sampling and training of the neural network can be parallelized across multiple local/distributed workers to speed up the gathering of the initialization samples, which can contribute to an even more efficient solution.

Moreover, neural networks do not necessarily need to be trained to full convergence. One may decide to train neural networks less to speed up the proposed procedure based on prior knowledge of the seed network and the target task. Furthermore, on this stage, the results of training networks can optionally be stored in a meta-info database DB2 for re-use on subsequent selection procedures.

In a step 60, metrics of performance estimation are computed corresponding to a set of performance estimation strategies 30 contained within a performance estimation strategy database DB 1. The database DB 1 represents a library of performance estimation strategies 30 such as e.g. model-based predictors like e.g. XGBoost, Adaboost, learning curve-based methods such as early stopping, and zero-cost proxies such as number of parameters.

Moreover, results from previous selection procedures and/or NAS searches being stored in a meta-info database DB2 can optionally be re-used at this stage as a result of a corresponding inquiry at step 51 and be included into the initialization to reduce the number of new architectures which need to be trained to speed up the entire performance estimation strategy selection procedure.

In a step 70 a ranking correlation is evaluated between the performance estimation metrics and the ground truth performance. In a step 80 it is checked, whether any of the performance estimation strategies 30 have meanwhile reached a sufficient correlation grade.

If this is not the case, the method jumps to step 40.

If this is the case, the process continues to a step 90, which delivers the determined optimizes performance estimation strategy 30 to an implementation 100 of NAS.

A "sufficient correlation grade" can be defined by the user P as input to step 80 or automatically determined by the system. In case the current correlation has not reached the required value, the process continues, and more networks are sampled from the search space in step 40 to increase the number of initialization samples to improve the correlation estimation. Furthermore, in a step 90 the process can also be aborted automatically, in case the user P defines a limited compute budget for this entire process.

Finally, in a step 90, when the achieved correlation is deemed sufficient or the compute budget has been exceeded, the system determines the best performance estimation strategy 30 by selecting the one which achieved the highest correlation, and which requires the lowest effort to compute.

Alternatively, users P are given the alternative to tradeoff correlation in favor of compute effort e.g., by selecting the strategy which achieved a top-2 highest correlation, but which has a lower compute effort, compared to a top-1 strategy.

In order to show the feasibility of the approach described in the present disclosure, the following set of experiments has been conducted, focused specifically on the use case "person detection" (e.g. via image data):
1) Evaluating the ability of our presented approach to identify top-performing learning curve-based, model-based and zero-cost proxy-based performance estimation strategies, showing that the proposed approach succeeds in identifying the top-performing strategies per category and that it is feasible to use little initialization samples to select good performance estimation strategies.
2) Evaluating the impact of using "imperfect" performance estimation strategies 30 on the task performance of the solutions found by NAS, showing that it is feasible to derive high-performing solutions using these performance estimators.
3) Evaluating the impact of performance estimation strategies 30 on NAS scalability, showing that by using the selected performance estimators, it is feasible to speedup NAS by orders of magnitude, while still achieving competitive results compared to full training.
4) Evaluating the ability of the presented approach to identify top-performing learning curve-based, model-based and zero-cost proxy-based performance estimation strategies

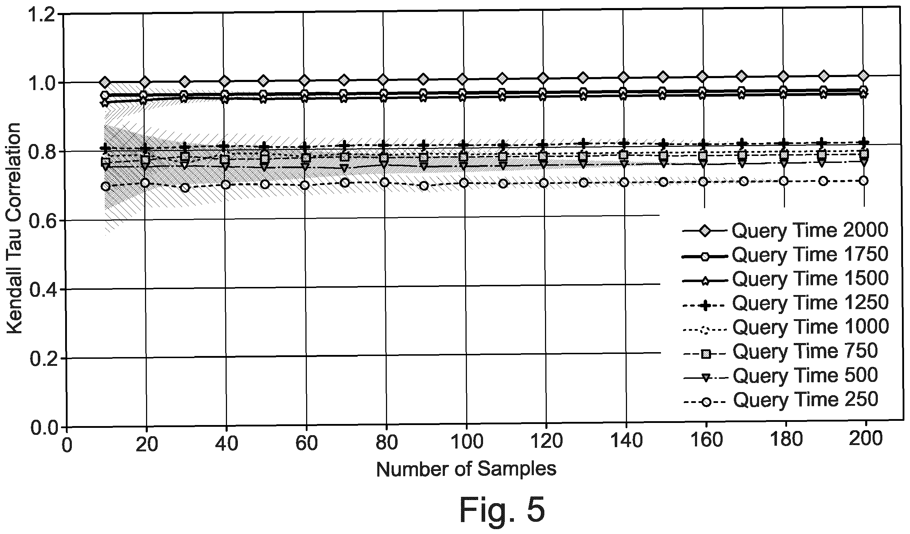

Exemplary results of using the present approach for identifying the top learning curve-based, model-based and zero-cost proxy-based performance estimation strategies for person detection are shown in figures 5, 6 and 7, depicting several performance estimation strategies 30 shown as correlation metrics vs. number of samples. These figures resemble the process that happens in steps 50, 60 in the method flow of FIG. 3.

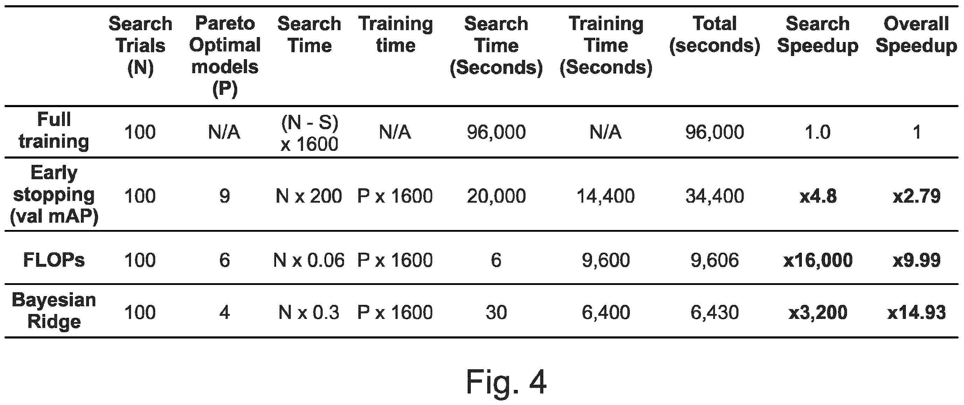

Results of said proposed approach are shown in the table of FIG. 4. One recognizes, that out of the evaluated strategies, a selection has been made. By using the selected strategy, good results may be achieved as shown in the Figs. 5 to 7. Shown are effects of performance estimation strategies 30 in three different categories: One recognizes a correlation metric (Kendall Tau Correlation, y-axis) which can be achieved vs. the number of architectures of neural networks needed to be trained (number of samples, x-axis), i.e. a correlation as a number of samples. The proposed process is worthwhile, because there is no need to train a lot of neural network architectures to make a selection of what is a good performance estimation strategy 30. Step 70 of the method flow of FIG. 3 makes the evaluation of the alternatives shown in Figs. 5 to 7.

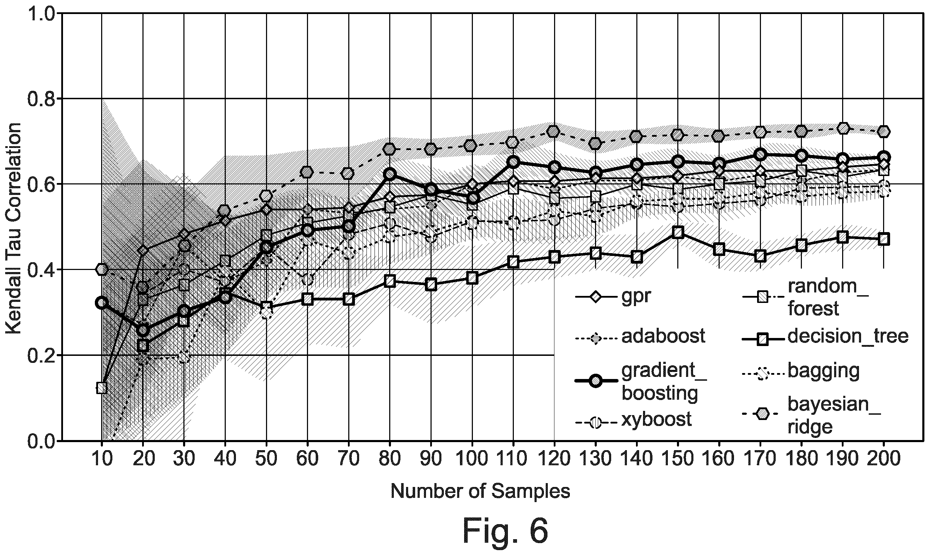

In FIG. 6 a correlation of different kinds of estimation approach ("model based predictor") is shown, wherein each shaded area represents a different model. E.g. it can be seen that at a number of samples = 40 the top performing model is the bayesian_ridge model.

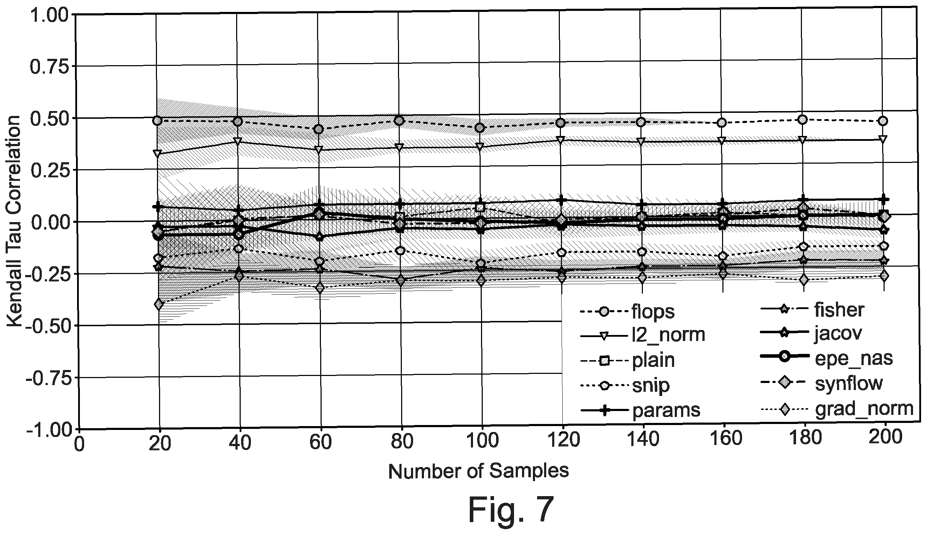

FIG. 7 shows zero cost proxies, which are a set of metrics that compute the try to estimate the performance without actually training the neural network at all. One recognizes, that only by using twenty architectures, already "flops" achieves a 0.5 correlation coefficient, while the other architectures are performing not so well.

For each of these methods, the mean and standard deviation of the achieved correlation as a function of the number of samples is reported, computed by repeating the experiment a total of hundred times. A total of twenty four performance estimation strategies is explored, it has been found that Early Stopping (τ = 0.69), Bayesian Ridge (τ = 0.52), and number of FLOPs (τ = 0.5) achieve the highest correlation per category. Furthermore, it has been found that approximately forty samples are sufficient to get an adequate correlation estimation across all the evaluated performance estimation strategies. This shows that the presented approach can succeed in identifying good performance estimation strategies 30, and that using a relatively low number of initialization samples can be a suitable approach to select a performance estimation strategy for a NAS use case.

Evaluating the impact of using "imperfect" performance estimation strategies on the task performance of the solutions found by NAS.

The impact of using these "imperfect" performance estimation strategies on NAS is reported. To this end, NAS is performed to optimize for task performance (mean Average Precision, mAP) and number of parameters using full training and random search for hundred trials. Then, using those hundred trials as benchmark, the Pareto front is derived using Early Stopping (τ = 0.69), and number of FLOPs (τ = 0.5) and these Pareto fronts are compared against the full training Pareto front.

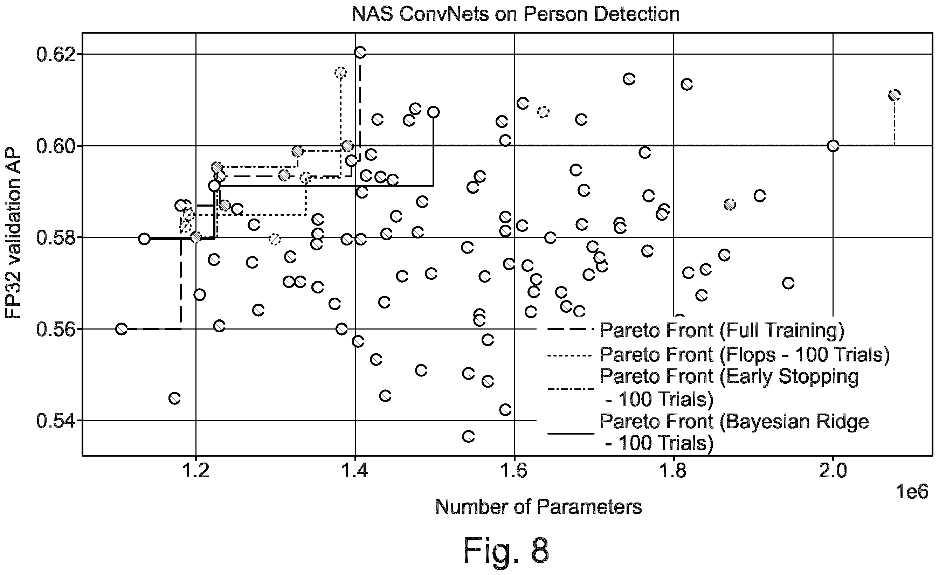

As can be seen in the table of FIG. 4, by using these performance estimation strategies instead of full training, a search speedups of up to ×16,000 and an overall speedup of up to x14.93 can be achieved. If we use the early stopping estimation strategy (2^{nd} row), the results shown in FIG. 8 are achieved: it is somewhat competitive to the full training (Pareto Front Full training) and in terms of speed up its 4.8 times faster and in overall speedup its 2.79 faster than full training. The strategy resulting in the Pareto Front Flops is one of the fastest ones with achieved competitive results against the full training. Furthermore, as shown in FIG. 8, these models achieve competitive performance, compared to results obtained when using full training, similar to the results observed on experiment 2. The results shown in table of FIG. 4 consider the time required to select the performance estimation strategy 30.

The proposed method can run on an electronic apparatus (not shown) being implemented at least partially as a software which can be stored in a computer readable memory of the electronic apparatus or at least partially as a firmware or at least partially as a hardware of the electronic apparatus.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document. E.g., the proposed method may be carried out not only in the context of UWB radar, but in the context of a radar device of any technology.

Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

### Reference numerals:

- 10: search strategy
- 20: search space
- 21: automated performance estimation strategy selection
- 30: performance estimation strategy
- 40... 90: method step s
- 100: implementation of NAS
- DB1: library of performance estimation strategies
- DB2: meta-info database
- A, B: prerequisite steps
- P: user
- t: time

## Claims

1. Method for preconfiguring a performance estimation strategy for neural architecture search, NAS, comprising the steps:
- selecting (40) a neural network out of a pre-defined search space (20) comprising a variety of neural network architectures, which represent numerous potential neural networks for a specific use case together with corresponding hyperparameters for a training of said neural networks;
- training (50) the selected neural network to a specified extent;
- computing (60) a performance estimation metrics under usage of various performance estimation of strategies;
- determining and evaluating (70) a ranking correlation between performance estimation metrics and the performance of a neural network having been trained to the specified extent; and
- determining (80, 90) a performance estimation strategy (30) for the neural architecture search, NAS in order to handle the specific use case by means of a neural network as a result of the evaluation step (70).

2. Method according to claim 1, wherein the training (50) to a specified extent is one out of: Full training, Early mean average precision, Flops.

3. Method according to claim 1 or 2, wherein depending on an achievement of a sufficient correlation, another performance estimation strategy (30) is used in computing (60) a performance estimation metrics or another neural network is sampled from the search space (20).

4. Method according to any of the preceding claims, wherein by the evaluation in the ranking correlation between performance estimation metrics and ground truth performance one out of the following is used: correlation as a function of number of samples for Zero-cost proxies, correlation as a function of number of samples for multiple model-based predictors, correlation as a function of number of samples for validation mAP estimation strategy.

5. Method according to any of the preceding claims, wherein a requirement how much correlation and how much computing time is considered to be sufficient for the test with respect to sufficient correlation is taken into account by determining (80, 90) a performance estimation strategy (30) for the neural architecture search, NAS.

6. Method according to any of the preceding claims, wherein a requirement how much correlation or how much computing time is considered to be sufficient for the test with respect to sufficient correlation is taken into account by determining (80, 90) a performance estimation strategy (30) for the neural architecture search, NAS.

7. Method according to any of the preceding claims, wherein a performance estimation strategy (30) with the highest correlation and the lowest computing effort is selected.

8. Method according to any of the preceding claims, wherein a performance estimation strategy (30) with the highest correlation or the lowest computing effort is selected.

9. Method according to any of the preceding claims, wherein hyperparameters are part of the search space (20) used to train the network.

10. Method according to any of the preceding claims, wherein results of previous runs of the training having been stored in a database (DB2) are reused in the course of the method.

11. Method according to any of the preceding claims, wherein in a step (60) as part of the loop the computation of performance estimation metrics for all strategies is done by taking into account the library of performance estimation strategies stored in a database (DB1).

12. Apparatus configured to perform a method according to any of the preceding claims.

13. Computer implemented method comprising executable instructions storable on computer-readable storage medium which, when executed by an apparatus of claim 12 cause said apparatus to carry out the method of any of claims 1 to 11.
